# EUROPEAN PATENT SPECIFICATION

(11) **EP 2 237 484 B1**
(45) Date of publication and mention of the grant of the patent: **17.12.2014**
(21) Application number: 10001110.5
(22) Date of filing: 03.02.2010
(51) Int. Cl.: H04L 12/28, F24F 11/00, H04L 12/24, H04L 29/08

(54) **Building equipment system and control method thereof**
Haustechniksystem und Steuerungsverfahren dafür
Construction de système d'équipement et son procédé de contrôle

(30) Priority: 04.02.2009 KR 20090008995; 04.02.2009 KR 20090008996
(43) Date of publication of application: 06.10.2010
(73) Proprietor: LG ELECTRONICS INC., Yeongdeungpo-gu Seoul 150-721 (KR)
(72) Inventor: Lee, Mun Hwan, Seoul, 153-023 (KR); Cha, Byoung Keun, Seoul, 153-023 (KR)
(74) Representative: Ter Meer Steinmeister & Partner

(56) References cited:
- EP-A1- 1 429 083
- EP-A1- 1 992 884
- EP-A2- 1 956 758
- WO-A1-00/48376
- US-A- 5 435 147
- US-A1- 2005 209 739

## Description

The present invention relates to a building equipment system, which is capable of easily registering building equipment units using a central control unit by automatically assigning attribute information and control point addresses of the building equipment units when the building equipment units are connected, and a control method thereof.

Generally, because a building includes many offices and rooms, a building equipment system includes a plurality of building equipment units including illumination apparatuses, heating apparatuses and air conditioners.

The building equipment system controls the plurality of building equipment units using a central control unit so as to efficiently perform management and control.

For example, if the plurality of building equipment units includes a multi-type air conditioner, the building equipment system checks the operation states of the plurality of multi-type air conditioners, and controls the plurality of multi-type air conditioners using the central control unit according to the checked result.

When control points of indoor and outdoor units of the plurality of multi-type air conditioners are registered and set, an engineer individually sets and registers control point setting information of the indoor and outdoor units connected to the central control unit.

Accordingly, the central control unit receives the control point setting information from the engineer and sets and registers the indoor and outdoor units.

In the building equipment system, because the engineer individually inputs the control point setting information of the plurality of building equipment units and the building equipment units are set and registered using the central control unit, set up time is increased and efficiency is decreased.

Accordingly, as the number of the plurality of building equipment units connected to the building equipment system is increased, research into a method of easily setting and registering the plurality of building equipment units using the central control unit has been conducted.

US 2005209739 A1 discloses an airconditioner system for integrating multiple areas, wherein a plurality of multi-airconditioners are grouped into some groups. A CPU controls individual multi-airconditioner groups to be operated simultaneously. If a failure occurs in one multi-airconditioner group, the remaining multi-airconditioner groups can be normally controlled.

US 5436147 A discloses an air conditioning control system ensuring the desired full utility so that the operation of a plurality of air conditioners installed in a building can be controlled and monitored at a plurality of spots in the building. The air conditioning control system includes a building's central monitor board controlling and monitoring the operation of the individual air conditioners, and a centralized control unit relaying air conditioner control information outputted from the central monitor board and information indicating the operation status of the individual air conditioners, each of the central monitor board and the centralized control unit including an input part inputting the control information to the individual air conditioners and a display part displaying the operation status information regarding the individual air conditioners. The centralized control unit further includes a decision part deciding to identify newest control information inputted from the input part of each of the central monitor board and the centralized control unit and a transmitter part transmitting this newest control information to the individual air conditioners.

WO 0048376 A1 discloses a building information system and method processes building-related data associated with a building. The building-related data is associatively stored in a database. A client interface communicates the building-related data between a client application and the data interface. Other services include a polling service for periodically detecting point data, a metering service for periodically detecting meter data, and a rates service providing real-time price control.

EP 1956758 A2 discloses a method and apparatus for automatically recognizing a device of a building management system.

### SUMMARY OF THE INVENTION

An advantage of the present invention is to provide a building equipment system, which is capable of easily registering building equipment units using a central control unit by automatically assigning attribute information and control point addresses of the building equipment units when the building equipment units are connected, and a control method thereof.

To achieve the above advantage, a building equipment system according to claim 1 and a method of controlling a building equipment system according to claim 9 are provided.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

FIG. 1 is a systematic diagram of a building equipment system according to the present invention;

FIG. 2 is a functional block diagram showing the configuration of a building equipment system according to a first embodiment of the present invention;

FIG. 3 is a flowchart illustrating a method of controlling a building equipment system according to the first embodiment of the present invention;

FIG. 4 is a functional block diagram showing the configuration of a building equipment system according to a second embodiment of the present invention; and

FIG. 5 is a flowchart illustrating a method of controlling a building equipment system according to the second embodiment of the present invention.

### DETAILED DESCRIPTION OF THE PREFERRED EMBODIMENTS

A building equipment system and a control method thereof according to the present invention will be described in detail with reference to the accompanying drawings.

There may be a plurality of embodiments of the building equipment system according to the present invention, but, hereinafter, a most preferred embodiment will be described.

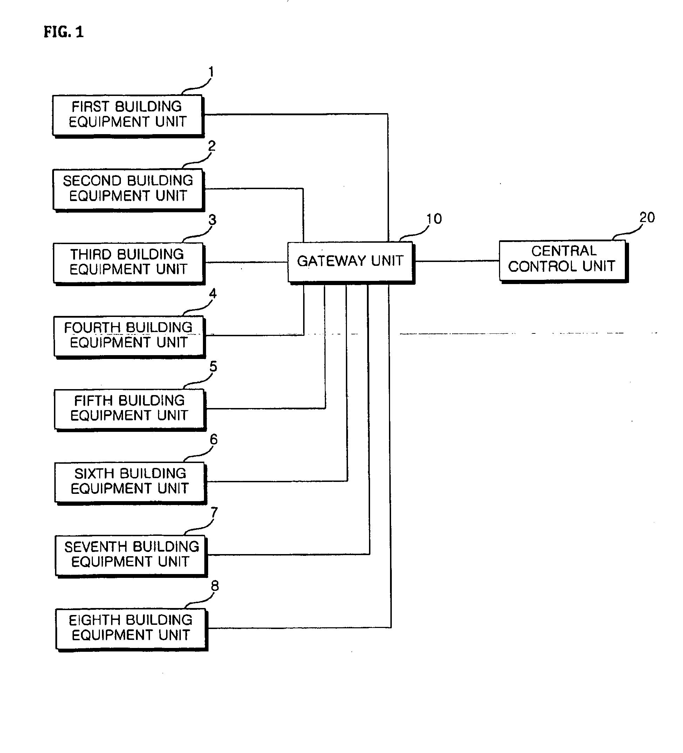

FIG. 1 is a systematic diagram of a building equipment system according to the present invention.

Referring to FIG. 1, the building equipment system includes first to eighth building equipment units 1 to 8, a gateway unit 10 and a central control unit 20.

The first to eighth building equipment units 1 to 8 are of different types, and are equipment units that may be electronically controlled in the present embodiment, such as an indoor unit, an outdoor unit, a cooling tower, a motor, and a compressor included in at least one of a water cooling type air conditioner and an air cooling type air conditioner, and are mounted for conditioning an indoor space of a large-sized building and a high-rise building.

Although the equipment units included in the water cooling type air conditioner and the air cooling type air conditioner mounted in the building are described as the first to eighth building equipment units 1 to 8 in the present embodiment, the present invention is not limited thereto and illumination apparatuses and a plurality of sensors may be included.

The gateway unit 10 is connected to the first to eighth building units 1 to 8 by wiring, and a Direct Digital Controller (DDC) and a Programmable Logic Controller (PLC) may be used.

The PLC controls the first to eighth building equipment units 1 to 8 by connecting to a control contact point, and the DDC controls the first to eighth building equipment units 1 to 8 connected not based on an Open protocol as in the PLC, but based on RS485 communication or Ethernet.

That is, the gateway unit 10 recognizes the equipment types and generates control point setting information using an equipment library describing the various equipment types, when the first to eighth building equipment units 1 to 8 are each separately connected.

The central control unit 20 receives the control point setting information generated by the gateway unit 10 through RS485 communication or Ethernet, and displays an object image and a control screen for displaying the operation of each of the first to eighth building equipment units 1 to 8 based on the control point setting information.

The central control unit 20 may be a computer or other central processing unit and centrally controls the first to eighth building equipment units 1 to 8 connected to the gateway unit 10.

Although the first to eighth building equipment units 1 to 8, the gateway unit 10 and the central control unit 20 are connected through RS485 communication or Ethernet communication in the present building equipment system, other protocols may be used.

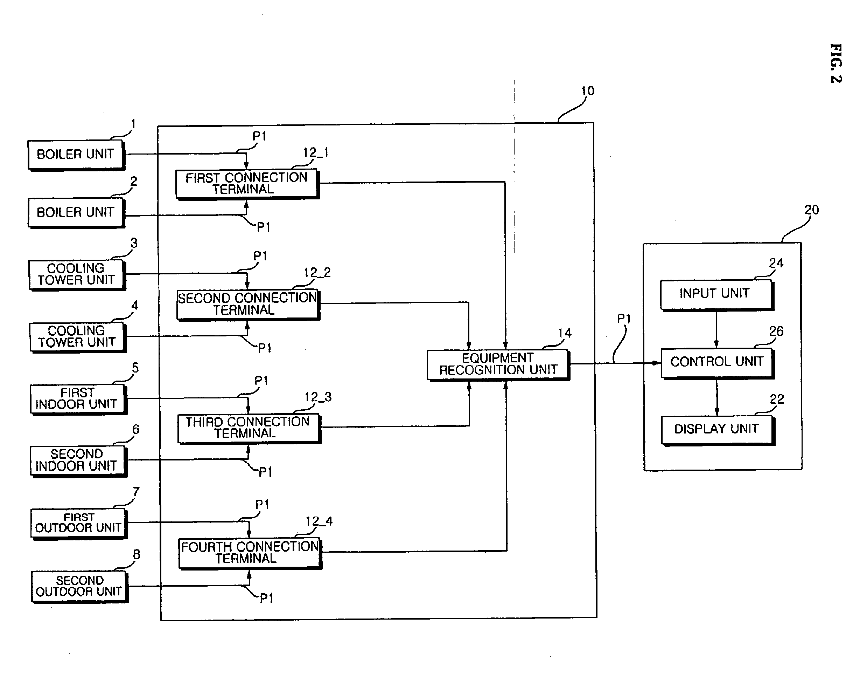

FIG. 2 is a functional block diagram showing the configuration of a building equipment system according to a first embodiment of the present invention.

Referring to FIG. 2, the present building equipment system includes first to eighth building equipment units 1 to 8, a gateway unit 10 and a central control unit 20.

In the present embodiment, the first to eighth building equipment units 1 to 8 include boiler units 1 and 2, cooling tower units 3 and 4, first and second indoor units 5 and 6 and first and second outdoor units 7 and 8. The present invention is not limited thereto and other building equipment units may be included.

The boiler units 1 and 2 and the cooling tower units 3 and 4 include other building equipment units included in a boiler and a cooling tower, respectively.

The gateway unit 10 includes a connection unit 12 to which the first to eighth building equipment units 1 to 8 are connected, and an equipment recognition unit 14 for recognizing the equipment types of the first to eighth building equipment units 1 to 8 connected to the connection unit 12 and generating control point setting information using an equipment library describing the various equipment types.

The connection unit 12 includes first, second, third and fourth connection terminals 12_1, 12_2, 12_3 and 12_4 such that the boiler units 1 and 2, the cooling tower units 3 and 4, the first and second indoor units 5 and 6 and the first and second outdoor units 7 and 8 of the first to eighth building equipment units 1 to 8 are separately connected.

Each of the first, second, third and fourth connection terminals 12_1, 12_2, 12_3 and 12_4 is connected to the equipment recognition unit 14 by an RS485 communication line P1.

The equipment recognition unit 14 recognizes the equipment types of the boiler units 1 and 2, the cooling tower units 3 and 4, the first and second indoor units 5 and 6 and the first and second outdoor units 7 and 8 separately connected to the first, second, third and fourth connection terminals 12_1, 12_2, 12_3 and 12_4 through RS485 communication lines.

The equipment recognition unit 14 generates the control point setting information using the equipment library describing the various equipment types.

The equipment library includes attribute information and control point addresses for the various equipment types and is used to assign a regular point control address according to the equipment type.

The control point addresses may be combination of gateway unit number, equipment type, connection terminal number, and connection point of a connection terminal. The attribute information may be such as equipment type, model number and control attributes (power on/off, temperature, fan speed, etc.) and attribute range (maximum temperature and minimum temperature, etc.).

The equipment recognition unit 14 generates the control point setting information including the attribute information and the control point addresses of the boiler units 1 and 2, the cooling tower units 3 and 4, the first and second indoor units 5 and 6 and the first and second outdoor units 7 and 8.

That is, the equipment recognition unit 14 applies code numbers or identifiers according to the equipment types and generates the control point setting information in which the attribution information and the control point addresses set in the equipment library are automatically assigned according to the code numbers or the identifiers.

The central control unit 20 displays an object image and a control screen for displaying the operation of each of the boiler units 1 and 2, the cooling tower units 3 and 4, the first and second indoor units 5 and 6 and the first and second outdoor units 7 and 8 according to the control point setting information received from the gateway unit 10.

The central control unit 20 includes a display unit 22 for displaying the object image and the control screen, an input unit 24 for inputting a selection command and an operation command related to the object image, and a control unit 26 for controlling the object image and the control screen to be displayed on the display unit 22 and controlling the boiler units 1 and 2, the cooling tower units 3 and 4, the first and second indoor units 5 and 6 and the first and second outdoor units 7 and 8 according to the selection command and the operation command received from the input unit 24.

That is, the control unit 26 controls the object image including the control point setting information to be displayed on the display unit 22, displays the attribute information and the control point addresses on the display unit 22 when the selection command is input by the input unit 24, and displays the control screen on the display unit 22 when the operation command is input.

Because the building equipment system according to the first embodiment automatically generates the control point setting information using the equipment library in which the attribute information and the control point addresses are stored according to the equipment types of the building equipment units, it is possible to reduce a registration time using the control point setting information which otherwise would be manually input by an engineer. This reduces the installation time and minimizes errors in registering the building equipment when the object image is displayed by the central control unit.

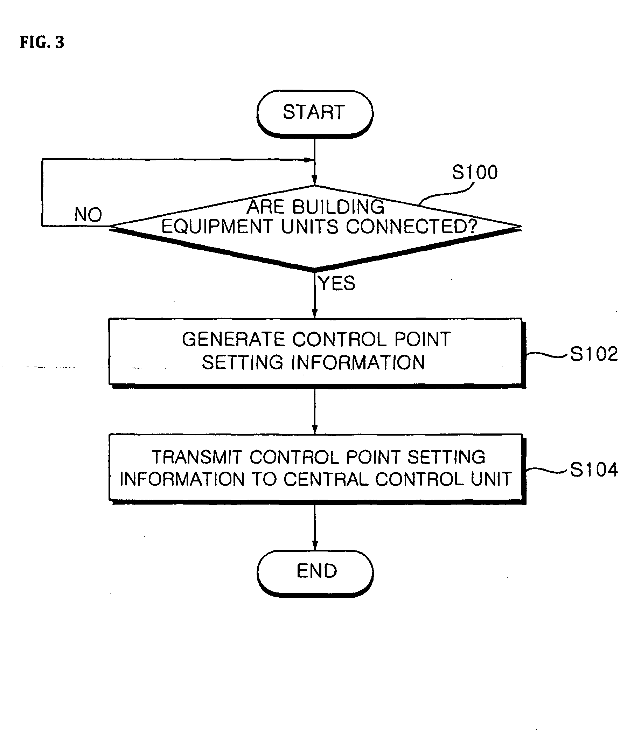

FIG. 3 is a flowchart illustrating a method of controlling a building equipment system according to the first embodiment of the present invention.

Referring to FIG. 3, the present building equipment system determines whether or not any building equipment units are connected (S100).

That is, the gateway unit 10 determines whether or not any of the first to eighth building equipment units 1 to 8 are connected to the connection unit 12 through the RS communication or Ethernet communication line.

In other words, the gateway unit 10 performs RS communication using the RS communication line P1 in order to determine whether or not any of the first to eighth building equipment units 1 to 8 are connected to the first to fourth connection terminals 12_1 to 12_4 of the connection unit 12, and determines that the building equipment units are connected, if communication is possible.

When the building equipment units are connected, the control point setting information is generated (S102).

That is, the gateway unit 10 generates the control point setting information including the attribute information and the control point addresses using the equipment library according to the equipment types of the first to eighth building equipment units 1 to 8, when the first to eighth building equipment units 1 to 8 are connected to the first to fourth connection terminals 12_1 to 12_4.

In other words, the equipment recognition unit 14 recognizes if the first to eighth building equipment units 1 to 8 are connected and automatically assigns the attribute information and the control point addresses using the equipment library according to the equipment types of the first to eighth building equipment units 1 to 8 connected through RS communication lines.

At this time, the equipment recognition unit 14 generates the control point setting information including the attribute information and the control point addresses.

The attribution information and the control point addresses may be displayed by code numbers or identifiers according to the equipment types.

The control point setting information is transmitted to the central control unit (S 104).

That is, the gateway unit 10 transmits the control point setting information of the connected first to eighth building equipment units 1 to 8 to the central control unit 20.

At this time, the central control unit 20 displays the object image, and the attribute information and the control point addresses included in the object image according to the control point setting information.

The central control unit 20 can individually or centrally control the first to eighth building equipment units 1 to 8 using the same object image as the first to eighth building equipment units 1 to 8.

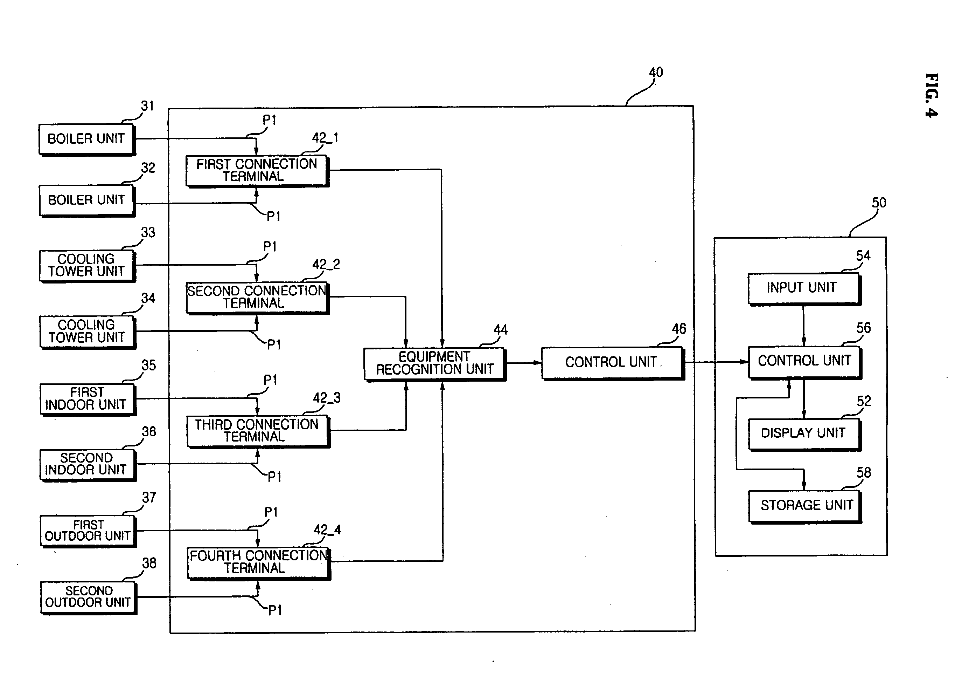

FIG. 4 is a functional block diagram showing the configuration of a building equipment system according to a second embodiment of the present invention.

Referring to FIG. 4, the present building equipment system includes first to eighth building equipment units 31 to 38, a gateway unit 40 and a central control unit 50.

The first to eighth building equipment units 31 to 3 8 include boiler units 31 and 32, cooling tower units 33 and 34, first and second indoor units 35 and 36 and first and second outdoor units 37 and 38.

The boiler units 31 and 32, the cooling tower units 33 and 34, the first and second indoor units 35 and 36 and the first and second outdoor units 37 and 38 are separately connected to the gateway unit 40 according to the equipment types.

The gateway unit 40 includes a connection unit 42 to which the first to eighth building equipment units 31 to 38 are connected, an equipment recognition unit 44 for recognizing the equipment types of the first to eighth building equipment units 31 to 38 connected to the connection unit 42 and for generating the control point information using an equipment library describing the various equipment types, and a control unit 46 for mapping the control point information to control point basic information of the equipment types of the first to eighth building equipment units 31 to 38 set by the central control unit 50 and generating control point setting information.

The connection unit 42 includes first, second third and fourth connection terminals 42_1, 42_2, 42_3 and 42_4 such that the boiler units 31 and 32, the cooling tower units 33 and 34, the first and second indoor units 35 and 36 and the first and second outdoor units 37 and 38 of the first to eighth building equipment units 31 to 38 are separately connected.

Each of the first, second, third and fourth connection terminals 42_1, 42_2, 42_3 and 42_4 is connected to the equipment recognition unit 44 by an RS485 communication line P1 for RS485 communication.

The equipment recognition unit 44 recognizes the equipment types of the boiler units 31 and 32, the cooling tower units 33 and 34, the first and second indoor units 35 and 36 and the first and second outdoor units 37 and 38 each separately connected to the first, second, third and fourth connection terminals 42_1, 42_2, 42_3 and 42_4 through RS485 communication.

The equipment recognition unit 44 generates the control point information using the equipment library describing the various equipment types.

The equipment library includes attribute information and control point addresses set according to the equipment types and is used to assign regular point control addresses according to the equipment types.

The equipment recognition unit 44 generates the control point information including the attribute information and the control point addresses of the boiler units 31 and 32, the cooling tower units 33 and 34, the first and second indoor units 35 and 36 and the first and second outdoor units 37 and 38.

That is, the equipment recognition unit 44 applies code numbers or identifiers according to the equipment types and generates the control point information in which the attribution information and the control point addresses set in the equipment library are automatically assigned according to the code numbers or the identifiers.

The control unit 46 maps the control point information generated by the equipment recognition unit 44 to the control point basic information transmitted from the central control unit 50, and automatically generates the control point setting information.

The control point basic information is setting information (model number, control attributes by equipment type and default value of attribute, etc.) related to the operation of the equipment types of the boiler units 31 and 32, the cooling tower units 33 and 34, the first and second indoor units 35 and 36 and the first and second outdoor units 37 and 38, and the control point information includes the attribute information and the control point addresses of the boiler units 31 and 32, the cooling tower units 33 and 34, the first and second indoor units 35 and 36 and the first and second outdoor units 37 and 38.

That is, the control unit 46 maps the control point information to the control point basic information and generates the control point setting information including the setting information, the attribute information and the control point addresses of the boiler units 31 and 32, the cooling tower units 33 and 34, the first and second indoor units 35 and 36 and the first and second outdoor units 37 and 38.

For example, if model number of the control point information is same as model number of the control point basic information, then the control unit 46 maps the setting information, the attribute information and the control point addresses to one object. If control attributes of the control point information is similar to control attributes of control point basic information, then the control unit 46 may map the setting information, the attribute information and the control point addresses to one object.

The setting information includes an object image to be displayed by the central control unit 50.

The central control unit 50 displays the object image and a control screen for displaying the operation of each of the boiler units 31 and 32, the cooling tower units 33 and 34, the first and second indoor units 35 and 36 and the first and second outdoor units 37 and 38 according to the control point setting information received from the gateway unit 40.

The central control unit 50 includes a display unit 52 for displaying the object image and the control screen, an input unit 54 for inputting a selection command and an operation command relating to the object image, and a control unit 56 for controlling the object image and the control screen to be displayed on the display unit 52 and controlling the boiler units 31 and 32, the cooling tower units 33 and 34, the first and second indoor units 35 and 36 and the first and second outdoor units 37 and 38 according to the selection command and the operation command received from the input unit 54.

The central control unit 50 further includes a storage unit 58 for storing the control point information. The control point information is the setting information relating to the operation of each of the boiler units 31 and 32, the cooling tower units 33 and 34, the first and second indoor units 35 and 36 and the first and second outdoor units 37 and 38, and the setting information includes the equipment types and characteristic information according to use.

The control unit 56 controls the object image and the control screen to be displayed on the display unit 52 according to the control point setting information transmitted from the gateway unit 40, displays the attribute information and the control point addresses on the display unit 52 when the selection command is input using the input unit 54, and displays the control screen on the display unit 52 when the operation command is input.

The control unit 56 updates the control point basic information using the control point setting information and stores the updated information in the storage unit 58.

Although one gateway unit 40 is used in FIG. 4, at least two gateway units may be included. If at least two gateway units are included, the first to eighth building equipment units 31 to 38 may be divided according to the equipment types.

If at least two gateway units 40 are mounted, a plurality of DDCs and PLCs may be commonly mounted.

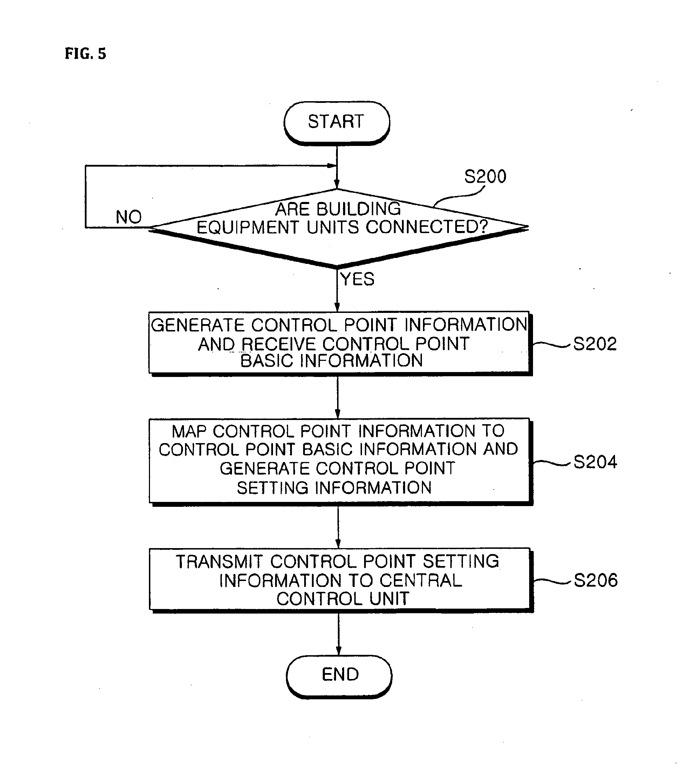

FIG. 5 is a flowchart illustrating a method of controlling a building equipment system according to the second embodiment of the present invention.

Referring to FIG. 5, the present building equipment system determines whether or not any of the building equipment units are connected (S200).

That is, the gateway unit 40 determines whether or not any of the first to eighth building equipment units 31 to 38 are connected to the connection unit 42 through RS communication or Ethernet communication line.

In other words, the gateway unit 40 performs RS communication using the RS communication line P1 in order to determine whether or not any of the first to eighth building equipment units 31 to 38 are connected to the first to fourth connection terminals 42_1 to 42_4 of the connection unit 42, and determines that the building equipment units are connected, if communication is possible.

When the building equipment units are connected, the control point information is generated according to the equipment types of the building equipment units and the control point basic information is received from the central control unit (S202).

That is, the gateway unit 40 generates the control point information according to the equipment types of the first to eighth building equipment units 31 to 38 and receives the control point basic information according to the equipment types from the central control unit 50, when the first to eighth building equipment units 31 to 38 are connected to the first to fourth connection terminals 42_1 to 42_4.

The equipment recognition unit 44 recognizes the equipment types of the connected first to eighth building equipment units 31 to 38, and generates the control point information including the attribute information and the control point addresses using the equipment library according to the equipment types.

The control unit 46 receives the control point basic information according to the equipment types from the central control unit 50.

The control point information is mapped to the control point basic information so as to generate the control point setting information (S204).

That is, the gateway unit 40 maps the control point information of the first to eighth building equipment units 31 to 38 to the received control point basic information according to the equipment types, and then generates the control point setting information.

In other words, the control unit 46 maps the control point information, in which the attribute information and the control point addresses are automatically assigned using the equipment library according to the equipment types of the first to eighth building equipment units 31 to 38 by the equipment recognition unit 44, to the control point basic information which is the setting information of the equipment types of the first to eighth building equipment units 31 to 38 according to the same equipment types, and generates the control point setting information.

The control point setting information includes the setting information, the attribute information and the control point addresses.

The control point setting information is transmitted to the central control unit (S206).

That is, the gateway unit 40 transmits the control point setting information of the connected first to eighth building equipment units 31 to 38 to the central control unit 50.

At this time, the central control unit 50 displays the object image, and the attribute information, the control point addresses and the setting information included in the object image according to the control point setting information.

The central control unit 50 can individually or centrally control the first to eighth building equipment units 31 to 38 using the same object image as the first to eighth building equipment units 31 to 38.

It will be understood by those skilled in the art that example embodiments can be implemented in other specific forms without changing the technical essential features of the present invention. Therefore, it should be noted that the forgoing embodiments are merely illustrative in all aspects and are not to be construed as limiting the invention. The scope of the invention is defined by the appended claims rather than the detailed description of the invention. All changes or modifications or their equivalents made within the meanings and scope of the claims should be construed as falling within the scope of the invention.

## Claims

1. A building equipment system comprising:
a gateway unit (40) that is arranged to generate control point setting information when building equipment units (31 to 38) are connected as control points; and
a central control unit (50) that is arranged to display an object image corresponding to each of the building equipment units (31 to 38) and a control screen for displaying an operation of each of the building equipment units (31 to 38) based on the control point setting information;
**characterized in that** the gateway unit (40) comprises:
a connection unit (42) to which the building equipment units (31 to 38) are connected; and
an equipment recognition unit (44) that is arranged to recognize equipment types of the building equipment units (31 to 38) connected to the connection unit (42) and that is arranged to generate control point information using an equipment library coincident with the equipment types;
a control unit (46) that is arranged to map the control point information to control point basic information of the equipment types of the building equipment units (31 to 38) set by the central control unit (50), and that is arranged to generate the control point setting information.

2. The building equipment system of claim 1, wherein the equipment recognition unit (44) is arranged to generate control point setting information using an equipment library describing the various equipment types.

3. The building equipment system of claim 2, wherein the connection unit (42) includes a plurality of connection terminals (42_1 to 42_4) separately connected according to the equipment types of the building equipment units (31 to 38).

4. The building equipment system of claim 2, wherein:
attribute information and control point addresses based upon the equipment types of the building equipment units (31 to 38) are set in the equipment library, and
the control point setting information includes the attribute information and the control point addresses of the building equipment units (31 to 38).

5. The building equipment system of claim 1, wherein the central control unit (50) includes:
a display unit (52) that is arranged to display the object image and the control screen;
an input unit (54) that is arranged to input a selection command and an operation command of the object image; and
a control unit (56) that is arranged to control the object image and the control screen to be displayed on the display unit (52) and that is arranged to control the building equipment units (31 to 38) according to the selection command and the operation command from the input unit (54).

6. The building equipment system of claim 5, wherein:
the control point setting information includes attribution information and control point addresses of the building equipment units (31 to 38), and
the control unit (56) is arranged to control the attribute information and the control point addresses to be displayed on the display unit (52), when the selection command of the object image is input.

7. The building equipment system of claim 1, wherein:
the control point basic information is setting information of the operation of each of the building equipment units (31 to 38),
the control point information includes attribute information and control point addresses of the building equipment units (31 to 38), and
the control unit (46) is arranged to generate the control point setting information in which the setting information, the attribute information and the control point addresses of the building equipment units (31 to 38) are mapped, and is arranged to transmit the control point setting information to the central control unit (50).

8. The building equipment system of claim 1, wherein the central control unit (50) is arranged to update the control point basic information using the control point setting information when the control point setting information is input.

9. A method of controlling a building equipment system, the method comprising:
determining (S200) whether or not building equipment units (31 to 38) are connected as control points;
recognizing equipment types of the building equipment units (31 to 38);
generating (S202) control point information using an equipment library coincident with the equipment types;
mapping (S204) the control point information to control point basic information of the equipment types of the building equipment units (31 to 38) set by a central control unit (50); generating (S204) control point setting information when the building equipment units (31 to 38) are connected; and the
transmitting (S206) the control point setting information to the central control unit (50).

10. The method of claim 9, wherein the generating (S202, S204) includes generating control point setting information using an equipment library coincident with the equipment types, when the building equipment units (31 to 38) are connected.

11. The method of claim 10, wherein:
attribute information and control point addresses according to the equipment types of the building equipment units (31 to 38) are set in the equipment library, and
the control point setting information includes the attribute information and the control point addresses.

12. The method of claim 11, wherein the central control unit (50) displays an object image including the attribute information and the control point addresses and a control screen for displaying an operation of each of the building equipment units (31 to 38), according to the control point setting information.

13. The method of claim 9, wherein:
attribute information and control point addresses according to the equipment types of the building equipment units (31 to 38) are set in the equipment library,
the control point information includes the attribute information and the control point addresses,
the control point basic information is setting information of the operation of each of the building equipment units (31 to 38), and
the control point setting information includes the setting information, the attribute information and the control point addresses.

## Patentansprüche

1. Gebäudeanlagensystem, das umfasst:
eine Gateway-Einheit (40), die dafür ausgelegt ist, Steueipunkt-Einstellinformationen zu erzeugen, wenn Gebäudeanlageeinheiten (31 bis 38) als Steuerpunkte angeschlossen werden; und
eine zentrale Steuereinheit (50), die dafür ausgelegt ist, ein Objektbild, das jeder der Gebäudeanlageeinheiten (31 bis 38) entspricht, und einen Steuerbildschirm zum Anzeigen eines Betriebs jeder der Gebäudeanlageeinheiten (31 bis 38) auf der Grundlage der Steuerpunkt-Einstellinformationen anzuzeigen;
**dadurch gekennzeichnet, dass** die Gateway-Einheit (40) umfasst:
eine Anschlusseinheit (42), an die die Gebäudeanlageeinheiten (31 bis 38) angeschlossen werden; und
eine Anlagenerkennungseinheit (44), die dafür ausgelegt ist, Anlagetypen der Gebäudeanlageeinheiten (31 bis 38), die an die Anschlusseinheit (42) angeschlossen sind, zu erkennen, und dafür ausgelegt ist, Steuerpunktinformationen unter Verwendung einer Anlagenbibliothek, die mit den Anlagetypen koinzident ist, zu erzeugen;
eine Steuereinheit (46), die dafür ausgelegt ist, die Steuerpunktinformationen auf Steuerpunkt-Basisinformationen der Anlagetypen der Gebäudeanlageeinheiten (31 bis 38), die durch die zentrale Steuereinheit (50) eingestellt werden, abzubilden, und dafür ausgelegt ist, die Steuerpunkt-Einstellinformationen zu erzeugen.

2. Gebäudeanlagensystem nach Anspruch 1, wobei die Anlagenerkennungseinheit (44) dafür ausgelegt ist, Steuerpunkt-Einstellinformationen unter Verwendung einer Anlagenbibliothek, die die verschiedenen Anlagetypen beschreibt, zu erzeugen.

3. Gebäudeanlagensystem nach Anspruch 2, wobei die Anschlusseinheit (42) mehrere Verbindungsanschlüsse (42_1 bis 42_4) umfasst, die entsprechend den Anlagetypen der Gebäudeanlageeinheiten (31 bis 38) getrennt angeschlossen sind.

4. Gebäudeanlagensystem nach Anspruch 2, wobei:
Attributinformationen und Steuerpunktadressen auf der Grundlage der Anlagetypen der Gebäudeanlageeinheiten (31 bis 38) in der Anlagenbibliothek eingestellt werden und die Steuerpunkt-Einstellinformationen, die Attributinformationen und die Steuerpunktadressen der Gebäudeanlageeinheiten (31 bis 38) enthalten.

5. Gebäudeanlagensystem nach Anspruch 1, wobei die zentrale Steuereinheit (50) umfasst:
eine Anzeigeeinheit (52), die dafür ausgelegt ist, das Objektbild und den Steuerbildschirm anzuzeigen;
eine Eingabeeinheit (54), die dafür ausgelegt ist, einen Auswahlbefehl und einen Betriebsbefehl des Objektbildes einzugeben; und
eine Steuereinheit (56), die dafür ausgelegt ist, das Objektbild und den Steuerbildschirm, die auf der Anzeigeeinheit angezeigt werden sollen, zu steuern, und dafür ausgelegt ist, die Gebäudeanlageeinheiten (31 bis 38) in Übereinstimmung mit dem Auswahlbefehl und dem Betriebsbefehl von der Eingabeeinheit (54) zu steuern.

6. Gebäudeanlagensystem nach Anspruch 5, wobei
die Steuerpunkt-Einstellinformationen Attributinformationen und Steueipunktadressen der Gebäudeanlageeinheiten (31 bis 38) enthalten und
die Steuereinheit (56) dafür ausgelegt ist, die Attributinformationen und die Steueipunktadressen, die auf der Anzeigeeinheit (52) anzuzeigen sind, zu steuern, wenn der Auswahlbefehl des Objektbildes eingegeben wird.

7. Gebäudeanlagensystem nach Anspruch 1, wobei:
die Steuerpunkt-Basisinformationen Einstellinformationen des Betriebs jeder der Gebäudeanlageeinheiten (31 bis 38) sind,
die Steuerpunktinformationen Attributinformationen und Steueradressen der Gebäudeanlageeinheiten (31 bis 38) enthalten und
die Steuereinheit (46) dafür ausgelegt ist, die Steueipunkt-Einstellinformationen, auf die die Einstellinformationen, die Attributinformationen und die Steuerpunktadressen der Gebäudeanlageeinheiten (31 bis 38) abgebildet sind, zu erzeugen, und dafür ausgelegt ist, die Steuerpunkt-Einstellinformationen zu der zentralen Steuereinheit (50) zu senden.

8. Gebäudeanlagesystem nach Anspruch 1, wobei die zentrale Steuereinheit (50) dafür ausgelegt ist, die Steuerpunkt-Basisinformationen unter Verwendung der Steuerpunkt-Einstellinformationen zu aktualisieren, wenn die Steueipunkt-Einstellinformationen eingegeben werden.

9. Verfahren zum Steuern eines Gebäudeanlagensystems, wobei das Verfahren umfasst:
Bestimmen (S200), ob Gebäudeanlageeinheiten (31 bis 38) an Steuerpunkte angeschlossen sind;
Erkennen von Anlagetypen der Gebäudeanlageeinheiten (31 bis 38);
Erzeugen (S202) von Steuerpunktinformationen unter Verwendung einer Anlagenbibliothek, die mit den Anlagetypen koinzident ist;
Abbilden (S204) der Steuerpunktinformationen auf Steuerpunkt-Basisinformationen der Anlagetypen der Gebäudeanlageeinheiten (31 bis 38), die durch eine zentrale Steuereinheit (50) eingestellt werden;
Erzeugen (S204) von Steuerpunkt-Einstellinformationen, wenn die Gebäudeanlageeinheiten (31 bis 38) angeschlossen werden; und
Senden (S206) der Steuerpunkt-Einstellinformationen zu der zentralen Steuereinheit (50).

10. Verfahren nach Anspruch 9, wobei das Erzeugen (S202, S204) das Erzeugen von Steuerpunkt-Einstellinformationen unter Verwendung einer Anlagenbibliothek, die mit den Anlagetypen koinzident ist, umfasst, wenn die Gebäudeanlageeinheiten (31 bis 38) angeschlossen werden.

11. Verfahren nach Anspruch 10, wobei:
Attributinformationen und Steuerpunktadressen in Übereinstimmung mit den Anlagetypen der Gebäudeanlageeinheiten (31 bis 38) in der Anlagenbibliothek eingestellt werden und
die Steuerpunkt-Einstellinformationen die Attributinformationen und die Steuerpunktadressen enthalten.

12. Verfahren nach Anspruch 11, wobei die zentrale Steuereinheit (50) ein Objektbild, das die Attributinformationen und die Steuerpunktadressen enthält, und einen Steuerbildschirm zum Anzeigen eines Betriebs jeder der Gebäudeanlageeinheiten (31 bis 38) in Übereinstimmung mit den Steueipunkt-Einstellinformationen anzeigt.

13. Verfahren nach Anspruch 9, wobei:
Attributinformationen und Steuerpunktadressen in Übereinstimmung mit den Anlagetypen der Gebäudeanlageeinheiten (31 bis 38) in der Anlagenbibliothek eingestellt werden und
die Steuerpunktinformationen die Attributinformationen und die Steueipunktadressen enthalten,
die Steuerpunkt-Basisinformationen Einstellinformationen des Betriebs jeder der Gebäudeanlageeinheiten (31 bis 38) sind und
die Steueipunkt-Einstellinformationen die Einstellinformationen, die Attributinformationen und die Steuerpunktadressen enthalten.

## Revendications

1. Système d'équipement de bâtiment comprenant :
une unité de passerelle (40) qui est agencée pour générer des informations de réglage de point de commande lorsque des unités d'équipement de bâtiment (31 à 38) sont reliées sous forme de points de commande ; et
une unité de commande centrale (50) qui est agencée pour afficher une image d'objet correspondant à chacune des unités d'équipement de bâtiment (31 à 38) et un écran de commande pour afficher un fonctionnement de chacune des unités d'équipement de bâtiment (31 à 38) sur la base des informations de réglage de point de commande ;
**caractérisé en ce que** l'unité de passerelle (40) comprend :
une unité de liaison (42) à laquelle les unités d'équipement de bâtiment (31 à 38) sont reliées ; et
une unité de reconnaissance d'équipement (44) qui est agencée pour reconnaître des types d'équipement des unités d'équipement de bâtiment (31 à 38) reliées à l'unité de liaison (42) et qui est agencée pour générer des informations de point de commande en utilisant une bibliothèque d'équipement coïncidant avec les types d'équipement ;
une unité de commande (46) qui est agencée pour mapper les informations de point de commande sur des informations de base de point de commande des types d'équipement des unités d'équipement de bâtiment (31 à 38) réglées par l'unité de commande centrale (50), et qui est agencée pour générer les informations de réglage de point de commande.

2. Système d'équipement de bâtiment selon la revendication 1, dans lequel l'unité de reconnaissance d'équipement (44) est agencée pour générer des informations de réglage de point de commande en utilisant une bibliothèque d'équipement décrivant les divers types d'équipement.

3. Système d'équipement de bâtiment selon la revendication 2, dans lequel l'unité de liaison (42) comprend une pluralité de terminaux de liaison (42_1 à 42_4) reliés séparément en fonction des types d'équipement des unités d'équipement de bâtiment (31 à 38).

4. Système d'équipement de bâtiment selon la revendication 2, dans lequel :
des informations d'attributs et des adresses de point de commande basées sur les types d'équipement des unités d'équipement de bâtiment (31 à 38) sont réglées dans la bibliothèque d'équipement, et
les informations de réglage de point de commande comprennent les informations d'attributs et les adresses de point de commande des unités d'équipement de bâtiment (31 à 38).

5. Système d'équipement de bâtiment selon la revendication 1, dans lequel l'unité de commande centrale (50) comprend :
une unité d'affichage (52) qui est agencée pour afficher l'image d'objet et l'écran de commande ;
une unité d'entrée (54) qui est agencée pour entrer une commande de sélection et une commande de fonctionnement de l'image d'objet ; et
une unité de commande (56) qui est agencée pour commander l'image d'objet et l'écran de commande à afficher sur l'unité d'affichage (52) et qui est agencée pour commander les unités d'équipement de bâtiment (31 à 38) en fonction de la commande de sélection et de la commande de fonctionnement provenant de l'unité d'entrée (54).

6. Système d'équipement de bâtiment selon la revendication 5, dans lequel :
les informations de réglage de point de commande comprennent des informations d'attributs et des adresses de point de commande des unités d'équipement de bâtiment (31 à 38), et
l'unité de commande (56) est agencée pour commander les informations d'attributs et les adresses de point de commande à afficher sur l'unité d'affichage (52), lorsque la commande de sélection de l'image d'objet est entrée.

7. Système d'équipement de bâtiment selon la revendication 1, dans lequel :
les informations de base de point de commande sont des informations de réglage du fonctionnement de chacune des unités d'équipement de bâtiment (31 à 38),
les informations de point de commande comprennent des informations d'attributs et des adresses de point de commande des unités d'équipement de bâtiment (31 à 38), et
l'unité de commande (46) est agencée pour générer les informations de réglage de point de commande sur lesquelles les informations de réglage, les informations d'attributs et les adresses de point de commande des unités d'équipement de bâtiment (31 à 38) sont mappées, et est agencée pour transmettre les informations de réglage de point de commande à l'unité de commande centrale (50).

8. Système d'équipement de bâtiment selon la revendication 1, dans lequel l'unité de commande centrale (50) est agencée pour mettre à jour les informations de base de point de commande en utilisant les informations de réglage de point de commande lorsque les informations de réglage de point de commande sont entrées.

9. Procédé de commande d'un système d'équipement de bâtiment, le procédé comprenant :
la détermination (S200) si des unités d'équipement de bâtiment (31 à 38) sont ou ne sont pas reliées sous forme de points de commande ;
la reconnaissance de types d'équipement des unités d'équipement de bâtiment (31 à 38) ;
la génération (S202) d'informations de point de commande en utilisant une bibliothèque d'équipement coïncidant avec les types d'équipement ;
le mappage (S204) des informations de point de commande sur des informations de base de point de commande des types d'équipement des unités d'équipement de bâtiment (31 à 38) réglées par une unité de commande centrale (50) ;
la génération (S204) d'informations de réglage de point de commande lorsque les unités d'équipement de bâtiment (31 à 38) sont reliées ; et
la transmission (S206) des informations de réglage de point de commande à l'unité de commande centrale (50).

10. Procédé selon la revendication 9, dans lequel la génération (S202, S204) comprend la génération d'informations de réglage de point de commande en utilisant une bibliothèque d'équipement coïncidant avec les types d'équipement, lorsque les unités d'équipement de bâtiment (31 à 38) sont reliées.

11. Procédé selon la revendication 10, dans lequel :
des informations d'attributs et des adresses de point de commande en fonction des types d'équipement des unités d'équipement de bâtiment (31 à 38) sont réglées dans la bibliothèque d'équipement, et
les informations de réglage de point de commande comprennent les informations d'attributs et les adresses de point de commande.

12. Procédé selon la revendication 11, dans lequel l'unité de commande centrale (50) affiche une image d'objet comprenant les informations d'attributs et les adresses de point de commande et un écran de commande pour afficher un fonctionnement de chacune des unités d'équipement de bâtiment (31 à 38), en fonction des informations de réglage de point de commande.

13. Procédé selon la revendication 9, dans lequel :
des informations d'attributs et des adresses de point de commande en fonction des types d'équipement des unités d'équipement de bâtiment (31 à 38) sont réglées dans la bibliothèque d'équipement,
les informations de point de commande comprennent les informations d'attributs et les adresses de point de commande,
les informations de base de point de commande sont des informations de réglage du fonctionnement de chacune des unités d'équipement de bâtiment (31 à 38), et
les informations de réglage de point de commande comprennent les informations de réglage, les informations d'attributs et les adresses de point de commande.
